# EUROPEAN PATENT APPLICATION

(11) **EP 2 933 745 A1**
(43) Date of publication of application: **21.10.2015**
(21) Application number: 14197668.8
(22) Date of filing: 12.12.2014
(51) Int. Cl.: G06F 21/10

(54) **Method and apparatus for downloadable DRM in a trusted execution environment**

(30) Priority: 14.04.2014 US 201414252537
(71) Applicant: Samsung Electronics Co., Ltd, Gyeonggi-do 443-742 (KR)
(72) Inventor: Verma, Sanjeev, Richardson, TX Texas 75082 (US); Stone, Glen D., Richardson, TX Texas 75082 (US)
(74) Representative: Nederlandsch Octrooibureau

(57) **Abstract**

An apparatus, system, and method to support downloadable DRM in a trusted execution environment is disclosed. A determination is made whether a platform supports the DRM requirements for protected content and an appropriate DRM module is downloaded if it is required. A DRM coordination agent in the trusted execution environment supports downloading a DRM module. A browser may include features to support utilizing the downloadable DRM module.

## Description

### FIELD OF THE INVENTION

The present invention is generally related to digital rights management. More particularly, the present invention is directed to a downloadable DRM scheme.

### BACKGROUND OF THE INVENTION

Digital Rights Management (DRM) protection is important in a variety of consumer products, including mobile devices. For example, one trend is that mobile devices such as smartphone and tablets are emerging as a main driver for multimedia traffic. As one example, consumers may play videos on their mobile devices, including video which includes DRM for copy prevention (piracy preventation).

One problem that arises is that a single consumer device may need to support multiple DRM solutions across different devices and platforms. For example, in 2013 Netflix, Inc. reported that it is has had problems implementing its service on Google's Android platform because of Android's many different active OS versions. This, in turn, requires Netflix to develop DRM support for devices one at a time. That it is, the Android DRM is too fragmented for Netflix to reach all devices in a single DRM solution.

Currently service providers and eco-systems (for instance Ultra Violet or Netflix) are supporting multitudes of DRM solutions to enable different business models. This introduces costly options before an OEM. One option for an OEM is to manufacture multiple versions of the same device to meet specific content protection needs of different service providers and eco-systems. However, this has the disadvantage that it is complex to manage custom made solution for every service provider and market. Another option for an OEM is to implement multiple DRM solutions in the device at the manufacturing time. However, this has the disadvantage that it is costly to support multiple DRM solutions in a single device. Moreover, memory is limited in many mobile devices, thus making it difficult to support multiple DRM solutions in a cost-effective manner.

An ecosystem such as Ultra Violet (UV) supports multiple DRM systems so that the OEM can implement one out of a number of DRM systems being supported by an ecosystem. This still does not adequately solve the problem since there will still be a number of service providers supporting one or two DRM solutions depending upon their business model.

An alternative solution is to us a browser-based downloadable plugin DRM scheme, such as a browser plugin. Existing downloadable DRM solutions are easily deployable since a user can download the desired plugin bundled with the player application. However, this simplicity comes with the security risk. The download DRM solution provider has no way of verifying the authenticity of the underlying platform. Content providers and rights holders generally consider browser plugins as security and privacy risk especially for high-value HD content. Also, every browser does not support plugins (e.g. Safari on iOS, Internet Explorer in Metro mode on Windows 8). For example, the popular media application Silverlight incorporates a DRM solution known as Playready. Applications like Playready simply install DRM as plugin to the browser. For instance, the Playready DRM is downloaded and installed as a browser plugin with the Silverlight player application. However, content providers view browser plugins as security and privacy risks, especially for high-value HD content. Also, all browsers do not support plugins (e.g. Safari on iOS, Internet Explorer in Metro mode on Windows 8). Moreover, another disadvantage of conventional downloadable DRM solutions is that they do not make sure that appropriate hardware measures have been taken before allowing the download and installation of DRM module on the platform.

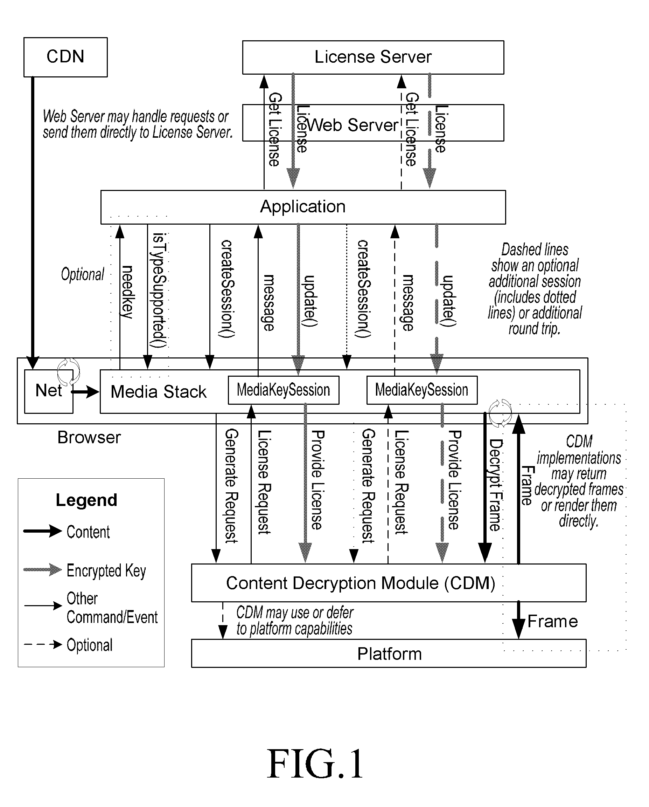

The World Wide Web Consortium (W3C) has proposed an extension to HTML5 to support DRM plugins. This proposed solution is known as the Encrypted Media Extensions (EME) which provides API support features. Figure 1 illustrates the proposed Encrypted Media Extensions for W3C in the W3C Editor's Draft of February, 2014. Currently, the W3C encrypted extensions allow Javascript in the web page to query the underlying platform through browser to ascertain whether a certain file format (Common FF), codec and content protection mechanism are supported in the platform. The web page first downloads the initialization metadata to determine whether the content is in protected form and platform meets the requirement to play the content. The streaming will be aborted if these requirements are not met by the underlying platform. Additionally the proposed JavaScript extensions support license/key exchange. However, while the W3C proposal includes APIs to control playback of protected content it does not define a particular content protection scheme for a Digital Rights Management System and has been criticized for potential security flaws.

Thus, conventional downloadable DRM solutions have numerous security and privacy risks. Therefore, what is desired is an improved downloadable DRM solution.

### SUMMARY OF THE INVENTION

A DRM protection scheme may require a platform to have a DRM module to decrypt content for a player application. A platform is disclosed that supports downloading a DRM module into a trusted execution environment. In one embodiment, a coordination agent is provided in the trusted execution environment to coordinate download and use of a DRM module from a DRM download server. Additional browser and web player features may be provided to support the download process.

An embodiment of a platform includes a processor and a memory. A trusted execution environment (TEE) includes a DRM coordination agent responsible for coordinating download and utilization of a DRM module from a DRM download server. The platform determines if a corresponding DM module to render the content is contained within the TEE. In response to determining that the corresponding DRM module is not present, the corresponding DRM module is downloaded to the TEE. The downloaded DRM module may be used to decrypt the protected content for rendering.

An embodiment of a method of using a web player application for digital rights management (DRM) protection includes determining whether content to be rendered by a web player application is protected by a DRM scheme. A determination is made whether the required DRM content protection is currently supported by the underlying platform. In response to determining that the DRM content protection is not currently supported, a download of a DRM module to the trusted execution environment is then scheduled. The downloaded DRM module may be used to decrypt the protected content for rendering.

An embodiment of a method is for downloading a Digital Rights Management (DRM) module to a trusted execution environment of a platform. The method includes receiving, at a browser, a communication from a web player application to determine whether a DRM module required to render protected content is available in the trusted execution environment. The browser may receive an inquiry whether the underlying platform has the capability to initiate the download of the DRM module. The browser may schedule a DRM download session from a DRM download server to download the DRM module to the trusted execution environment.

### BRIEF DESCRIPTION OF THE DRAWINGS

Figures 1 illustrates a DRM scheme in accordance with the prior art;
Figure 2 illustrates a trusted content platform coordinating download of a DRM module into a trusted execution environment in accordance with an embodiment of the present invention;
Figure 3 illustrates a stack media representation of APIs supporting a downloadable DRM module in accordance with an embodiment of the present invention;
Figure 4 illustrates aspects of the DRM coordinator agent in accordance with an embodiment of the present invention;
Figure 5 illustrates operation of a downloads DRM module in accordance with an embodiment of the present invention;
Figure 6 illustrates a method of downloading a DRM module in accordance with an embodiment of the present invention;
Figure 7 illustrates a method of downloading a DRM module in accordance with an embodiment of the present invention; and
Figure 8 illustrates a method of downloading a DRM module in accordance with an embodiment of the present invention.

### DETAILED DESCRIPTION

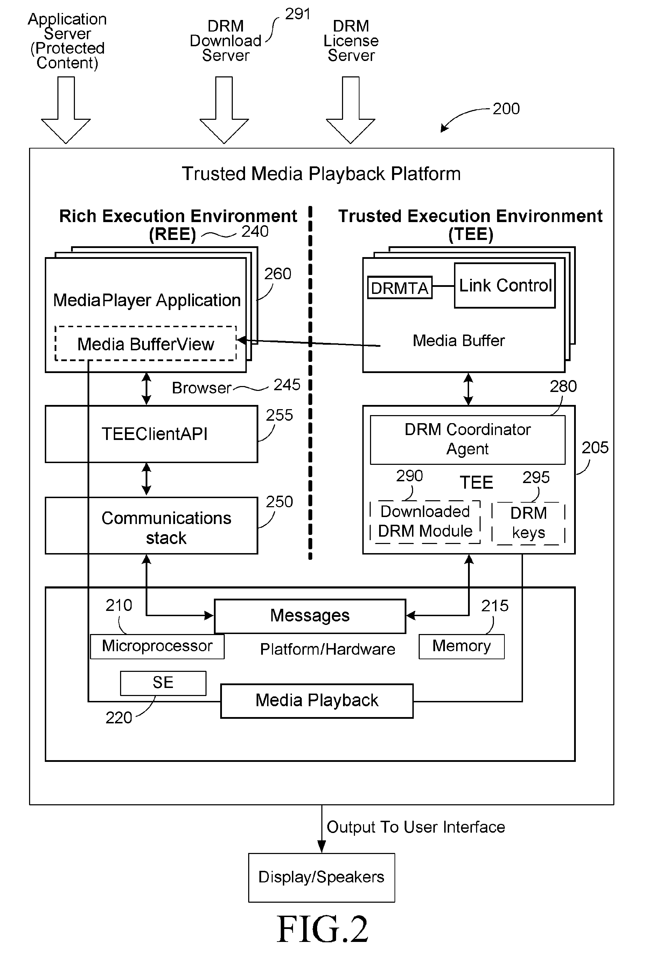

Figure 2 is a high-level overview of exemplary system for providing a trusted media playback platform 200 based on a trusted execution environment (TEE) 205 in accordance with an embodiment of the presentation. The platform may for example, include hardware and software. The platform may, for example, be implemented on a mobile device or other computing device having a processor 210 and a memory 215. A secure trusted platform or secure chip having a secure element 220 or other tamper resistant secure element may be provided to support the TEE. In one embodiment the TEE 205 is implemented as a light-weight implementation of a Secure OS with limited capabilities (e.g., no scheduling) and resources. A rich execution environment (REE) 240 may be provided including a browser 245, communications stack 250, TEE APIs 255, and media stack (not shown) to support a media player application 260. Messaging is supported between the REE 240 and the TEE 205. Media buffering and other support features may also be provided.

The platform 200 receives DRM protected content from an application server. The protected content needs to be decrypted by the platform in order to render the content and then transmit the content to a user interface 270, such as a display and speaker.

In one embodiment the protected content is provisioned with metadata to allow a web application to pass requisite information to the underling platform to initiate a download of a DRM module appropriate for the protected content from a DRM download server.

The TEE includes a DRM coordination agent 280 ("DRM coordinator:") within the TEE 205 to coordinate the download of a DRM module appropriate for the protected content. Additional browser support is provided for the DRM download. In one embodiment, a web-based player application queries the underlying platform regarding its security capabilities before allowing download of the DRM module. Additionally, the DRM coordinator 280 may authenticate the DRM download server 291 before allowing the device to download a DRM module.

In one embodiment, a web application may query the platform regarding the availability of content protection mechanism before initiating the download of the DRM module and installation into the TEE. The download may be performed on a demand basis. That is, a determination is made if the platform already has an appropriate DRM module 290 downloaded in the TEE and a download is initiated if required. In one embodiment HTML extensions (e.g., extensions to HTML5) are used to support the secure download of the DRM module on a demand basis.

In accordance with an embodiment of the present invention, the platform detects whether it already has the appropriate DRM module to decrypt the protected content. If not, the platform downloads the appropriate DRM module to the TEE 205. The browser and the DRM coordinator supports secure downloading of a DRM module 290 and corresponding DRM keys 295.

In an exemplary streaming session, a user first selects the content at a website for streaming. In browser-based solutions, Web applications can ensure that required elements are already there in the platform to render the content before initiating the streaming. In one embodiment of a browser-based solution, the browser first downloads the initialization header containing the content protection signaling related metadata. When DRM content is provided to a client device, download information (metadata) for a DRM module is used for installing a DRM agent corresponding to the DRM system that is applied to the DRM content. Using this metadata, it is possible for the client device to download the DRM module based on the metadata information bundled with the content to install the DRM module (also known as a DRM agent), and use the DRM content. The web application can determine whether the underlying platform already has a pre-installed DRM or possesses the capability to download and install the DRM module before initiating the streaming.

An exemplary embodiment leverages off of extensions in HTML 5 that support DRM, although it will be understood that embodiments of the present invention are not limited to HTML 5 implementations. The specification for theW3C Encrypted Media Extensions allows a web page to query the platform regarding the support of a DRM module needed for the content rendering. The streaming is aborted if the platform does not have pre-installed DRM needed for the content rendering. Embodiment of the present invention provides further capabilities to HTML, whereby an application can communicate with the secure chip (TEE) and facilitate the installation of the DRM module in the TEE.

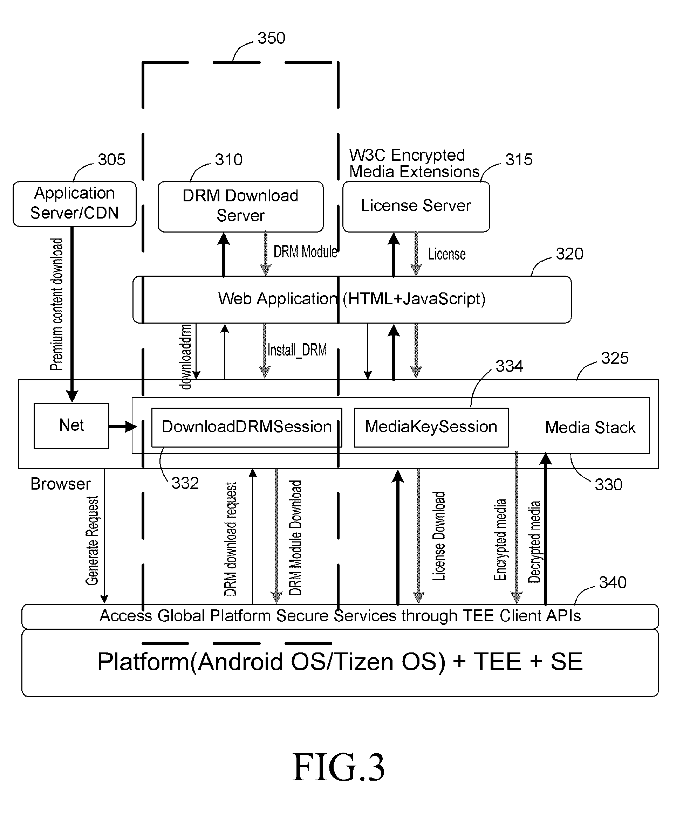

Figure 3 illustrates a generic media stack implementation of APIs to support a downloadable DRM mechanism in a device with the trusted platform in accordance with an embodiment of the present invention. An application server/content delivery network 305 provides protected content, such as a DRM protected video. The DRM download server 310 supports download of a DRM module. A license server 315 provides a license for the content, and may for example, utilize W3C Encrypted Media Extensions. A web player application is provided 320, a browser 325 having a media stack 330, and a platform 340 having a trusted execution environment and TEE client APIs. The platform could be any hardware and software platform having a TEE. A secure element (SE) may be provided for platform security. The platform may be implemented using a variety of operating systems. As illustrative examples, the platform OS may be an Android OS platform or the Tizen open source OS platform.

The dashed box 350 is provided to illustrate some of the new features over conventional approaches proposed by W3C for HTML5. In particular, features are provided to support a download DRM session 332. These include techniques for the web application, browser, and DRM coordinator in the TEE to communicate, determine whether the platform supports the DRM scheme of the protected content, download and utilize a DRM module appropriate for the protected content, and verify the DRM download server. Embodiments of the present invention provide further extensions to enable downloadable DRM and installation by the underlying secure trusted platform.

An exemplary sequence of requests/commands is illustrated by the arrows in Figure 3. The web application 320 may initiate a download DRM request to the browser to schedule a DRM download request from the DRM download server to the TEE. The DRM module may be transparently passed from the DRM download server to the TEE via the web application and browser.

In one embodiment, popular media formats (MP4 or MPEG2 TS) carry the metadata that allows a device to download a DRM module from a DRM download server hosted by the service provider or eco-system provider. For example, a technique for downloading a DRM module for MP4 is described in US Pub. No. 20120090034, entitled "Method And Apparatus For Downloading DRM Module," the contents of which are hereby incorporated by reference.

The media key session 334 to enable download of DRM license may include any known approach. For example, a media key session is part of the draft version of the W3C Encrypted Media Extensions.

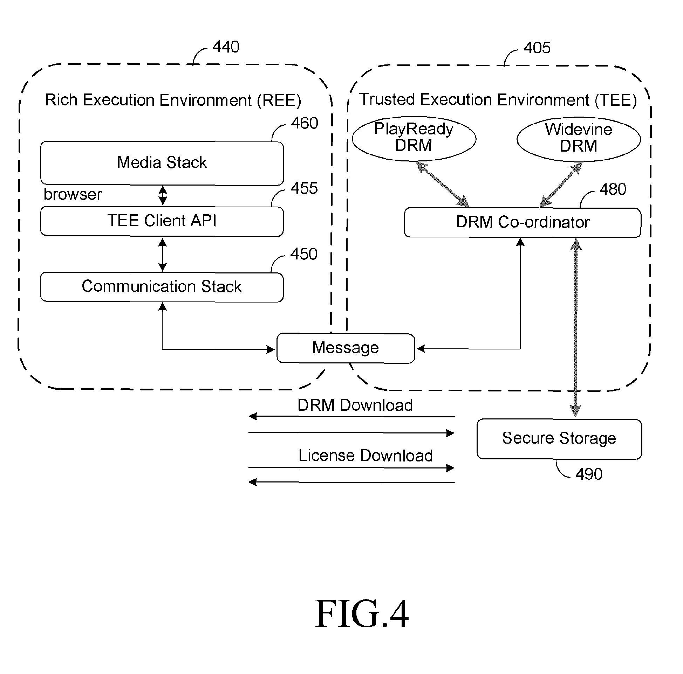

Figure 4 shows in more details aspects of the DRM coordinator. In one embodiment a DRM coordinator 480 is provided in the TEE 405 and secure storage 490 for keys may be provided in the TEE or elsewhere in the platform. The DRM coordinator 480 is a trusted application implemented in the secure trusted platform at the manufacturing time. It interfaces to the web application through the browser to initiate the download of the DRM module required for the rendering of the content. The DRM coordinator 480 is also responsible for the management of the DRM Module once the DRM module is downloaded. In one embodiment it registers with the browser. This registration procedure supports the browser communicating with the DRM coordinator in case download of the DRM module has to be initiated. The Rich Execution Environment 440 may include a communication stack 450 and TEE client APIs 455 that support messaging between the media stack 460 of the browser and the DRM coordinator 480. The secure storage area 490 is provided for the DRM coordinator agent to store secure key information for a downloaded DRM module.

Figure 4 also illustrates messaging aspects of operation. In this example, the DRM coordinator has previously downloaded DRM modules that act as agents to decrypt DRM protected content. As examples, the downloaded DRM modules may be for the Playready and Widevine DRM schemes. Additional arrows illustrate that there are communications paths between the REE and the TEE to support DRM download and license download.

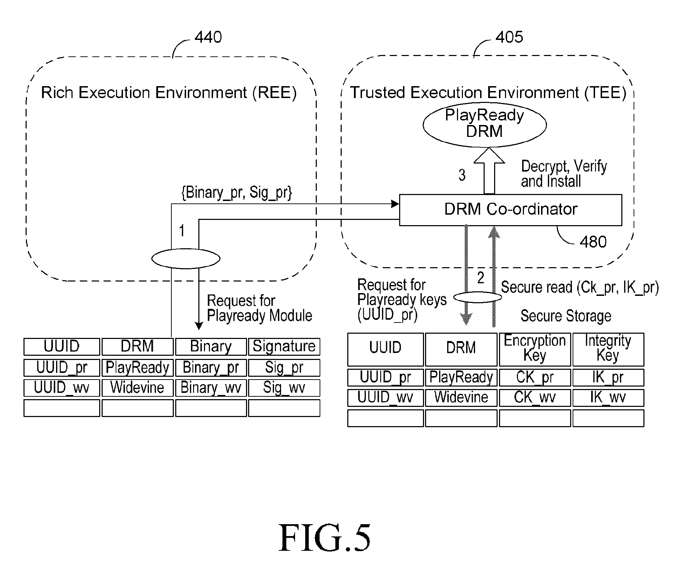

After a DRM module is download to the TEE it may be used to decrypt protected content. Figure 5 illustrates in more detail how the DRM coordinator receives a request for a DRM module (e.g., the Playready DRM Module), having an associated universal unique ID (UUID), binary, and signature. A secure read may be performed to read the keys from secure storage. The DRM coordinator then decrypts, verifies and installs the appropriate DRM module. The protected content can then be rendered by the platform. The rendered content may then be displayed on a user interface, although it will be understood that additional encryption protection of rendered content may also be provided along the bus interfaces to the user interface.

Exemplary methods are now described for determining whether the required DRM module is available and downloading the DRM module to the TEE. The method can be described from the viewpoint of the web application and browser and at different levels of detail.

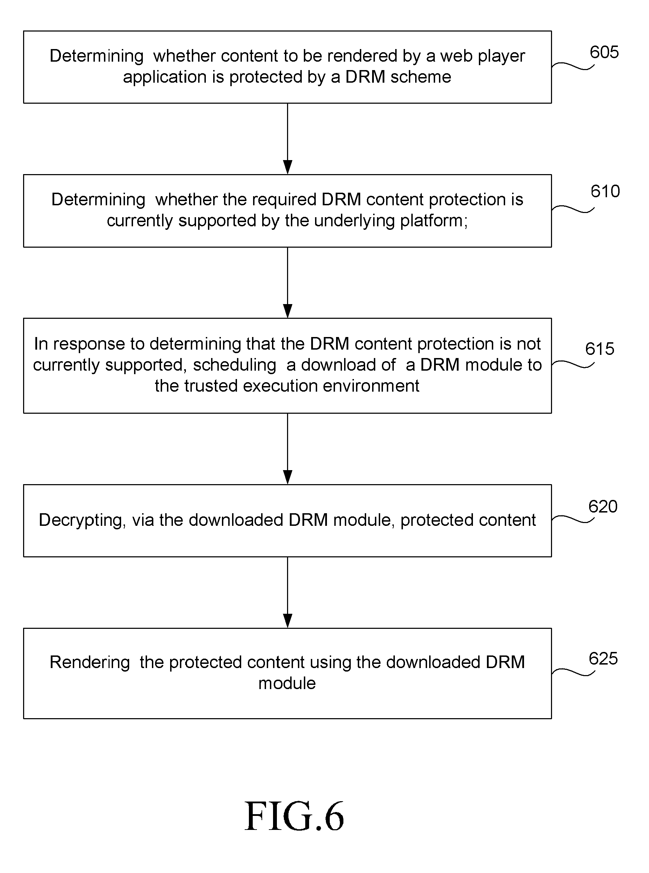

Figure 6 illustrates a high level flow diagram of a method in accordance with an embodiment of the present invention. Referring to Figure 6, in one embodiment a determination 605 is made whether content to be rendered is protected by a DRM scheme. In one embodiment the browser extracts content metadata although more generally the web player application may also perform aspects of this determination. A determination is made 610 whether required DRM content protection is current supported by the platform. In one embodiment, downloaded DRM modules are registered with the browser. If it is determined that the required DRM module is not current supported by the underlying platform, a download is scheduled (615) of the required DRM module to the TEE. After the DRM module is downloaded, it may be used to decrypt 620 the protected content for rendering 625.

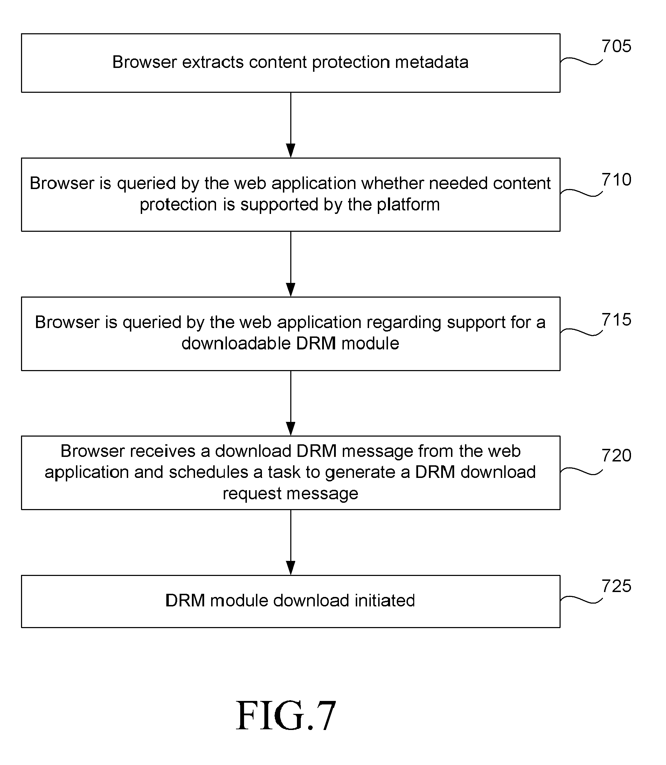

Referring to Figure 7, an exemplary method is now described, primarily from the perspective of the browser, and including extensions leveraging off of HTML5 features and the W3C EME license download features. Reference is also made to some of the features in Figure 3 for the Download DRM session. In one embodiment the browser first browses the content hosted at the CDN/Application Server 305 of Figure 3 and extracts the initData, which contains the metadata associated with the content. The data structure of the initData is content format specific.

The browser then parses the extracted metadata to determine whether the content is protected. It then informs the web application or page that the content is protected. The browser also extracts 705 appropriate metadata (associated with the content protection mechanism) from the initData and passes it to the page for further processing.

The web application or page then queries the browser 710 through the method isTypeSupported () whether the needed content protection is supported by the underlying platform. As previously discussed, in one implementation the underlying platform registers with the browser regarding the content protection systems currently available in the platform.

If the underlying platform does not already have (installed or implemented) any one of the content protection mechanisms needed to render the content then the web application queries 715 the browser regarding the support for downloadable DRM in the platform.

The Web application sends a downloaddrm() message to the browser. This message contains the initData as a parameter.

The browser, in response to receiving 720 the downloaddrm message, then creates a DownloadDRMSession object and schedules a task to generate a DRM download request message providing initData and newly created object. A user agent then queues a task to fire an event named download_drm message at the new object containing the following parameters:
a. Message: DRM module download request
b. Dest URL: DRM Downlaod Server URL

The DRM coordinator in the trusted part of the platform (Trusted Execution Environment) initiates 725 the download of the DRM module once this event is received. In one embodiment messages from the DRM Coordinator is transparently passed to the Web Application through the browser. The messages exchanged between the DRM coordinator and the Download server may take different forms. In one embodiment, this messaging may consists of a number of messages-for instance, download server may like to authenticate the integrity of DRM coordinator application before honoring its request for the DRM module.

The Web Application then securely receives the DRM module in a standard package containing the binary and the signature. The package also contains the keys needed to decrypt and verify the downloaded DRM module.

The Web application and browser transparently passes the package to the DRM Coordinator running in TEE.

The DRM coordinator unpacks the downloaded package. It then decrypts and verifies the downloaded module before installing it. Also the DRM coordinator installs the keys associated with the downloaded DRM at secure storage. The encrypted DRM module along with the signature can be stored anywhere in the device. Note that only DRM coordinator has access to the associated keys that are stored in secure storage.

The Web application is then informed regarding the installation of the DRM through the browser.

The Web Application now creates a media session and initiates the download of the DRM license as described in the W3C encrypted media extensions draft.

The Trusted Execution Environment may be implemented with a lightweight Secure OS having limited resources. Consequently, in one embodiment the DRM coordinator may uninstall the DRM module after rendering the content in view of the limited resources. This may be required, for example, if more than one DRM systems are to be supported in the device. The advantage of this mechanism is that a number of DRM solutions can be downloaded in the device and then installed in the secure environment as needed.

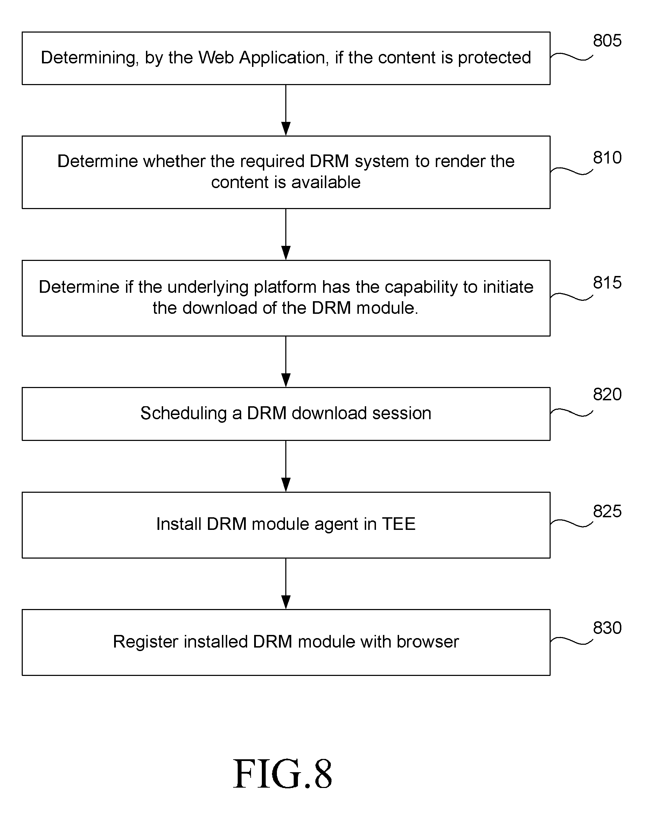

Referring to Figure 8, an embodiment primarily from the perspective of the web application is now considered. In one embodiment the web application first extracts information from the content metadata to determine 805 if the content is protected. If the content is protected then the web application communicates with the browser to determine 810 whether the required DRM system to render the content is available. Downloaded DRM modules are registered with the browser such that they do not need to be re-downloaded when new content is selected.

If the required DRM system is not registered with the browser then the Web application enquires the browser to determine 815 the underlying platform has the capability to initiate the download of the DRM module.

If the underlying platform supports downloadable DRM then a DRM download session is scheduled 820 and the appropriate message (containing appropriate metadata) is sent to the DRM coordinator in the trusted execution environment to initiate 825 the DRM download.

The DRM module code may be packaged in a standard format containing encrypted binary and signature. In one embodiment the agent in the TEE also obtains keys to decrypt and verify the downloaded DRM module. The downloaded DRM module can be stored anywhere in the device (not necessarily in the TEE). The DRM coordinator uses the APIs of the TEE to store corresponding keys in the secure storage. These keys are indexed by UUID to identify the DRM module.

In one embodiment the DRM coordinator running in the TEE installs the DRM module in the TEE at the rendering time by copying the corresponding code in the TEE. It decrypts and verifies the code before installing the DRM module. It obtains the corresponding keys from the secure storage using the UUID of the DRM systems.

Note that there may be one or more installed DRM systems in the device at the same time. All the installed DRM systems are registered with the browser and the DRM coordinator in the TEE. As previously discussed the DRM coordinator is also registered with the browser.

While embodiment for downloading DRM modules have been described, it will be understood that additional download capabilities may be supported, such as the download of other task modules required in the end-to-end trusted media path such as Watermark detection, secure player and link protection module allowing for flexible content protection implementations.

While a browser-based implement has been described it will also be understood that one can also implement the present invention in a browser independent manner, where native or Java Code is used to download the DRM module.

While the invention has been described in conjunction with specific embodiments, it will be understood that it is not intended to limit the invention to the described embodiments. On the contrary, it is intended to cover alternatives, modifications, and equivalents as may be included within the spirit and scope of the invention as defined by the appended claims. The present invention may be practiced without some or all of these specific details. In addition, well known features may not have been described in detail to avoid unnecessarily obscuring the invention. In accordance with the present invention, the components, process steps, and/or data structures may be implemented using various types of operating systems, programming languages, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. The present invention may also be tangibly embodied as a set of computer instructions stored on a computer readable medium, such as a memory device.

## Claims

1. A platform for downloadable Digital Rights Management (DRM), comprising:
at least one processor and a memory; and
a trusted execution environment (TEE) including a DRM coordination agent responsible for coordinating download and utilization of a DRM module from a DRM download server;
the platform in response to an attempt to render DRM protected content determining if a corresponding DRM module to render the content is contained within the TEE and in response to determining that the corresponding DRM module is not present, downloading to the TEE the corresponding DRM module.

2. The platform of claim 1, further comprising a browser in communication with the DRM agent, wherein the browser provides, in response to a request from a web player application, scheduling of a download of a DRM module to the DRM agent in the TEE.

3. The platform of claim 2, wherein each downloaded DRM module is registered with the browser.

4. The platform of claim 3, further comprising a secure storage area to store keys for downloaded DRM modules.

5. The platform of claim 1, further comprising a native application to implement a download of a DRM module to the DRM agent in the TEE.

6. A method to download a Digital Rights Management (DRM) module to a trusted execution environment of a platform, comprising:
receiving, at a browser, a communication from a web player application to determine whether a DRM module required to render protected content is available in the trusted execution environment;
receiving, at the browser, an inquiry whether the underlying platform has the capability to initiate the download of the DRM module; and
scheduling, at the browser, a DRM download session from a DRM download server to download the DRM module to the trusted execution environment.

7. The method of claim 6, further comprising extracting information from content metadata of the protected content and determining how the content is protected based on the content metadata,
wherein the scheduling includes at least one of scheduling a DRM download to a DRM coordination agent and performing a registration procedure to register the DRM coordination agent with the browser.

8. The method of claim 6, further comprising registering each downloaded DRM module with the browser.

9. The method of claim 6, further comprising:
browsing, by the browser, protected media content and extracting metadata associated with the content indicating that the content is protected;
informing the web player application that the content is protected; and
providing an indication to the web application whether the DRM module to render protected content is currently supported by the platform.

10. The method of claim 13, further comprising:
providing, in response to a query from the web application, an indication of support of a downloadable DRM in the platform.

11. The method of claim 14, further comprising:
receiving a download DRM command from the web player application; and
initiating the scheduling a task to generate a download DRM request message to initiate the download of the DRM module,

12. The method of claim 6, further comprising:
transparently passing, by the browser, the DRM module to a DRM agent in the trusted execution environment,
further comprising:
informing the web application, via the browser, that the DRM module is installed.

13. A method of using a web player application for digital rights management (DRM) protection in a system having a platform with a trusted execution environment in a platform, the method comprising:
determining whether content to be rendered by a web player application is protected by a DRM scheme;
determining whether the required DRM content protection is currently supported by the underlying platform;
in response to determining that the DRM content protection is not currently supported, scheduling a download of a DRM module to the trusted execution environment; and
decrypting protected content via the downloaded DRM module.

14. The method of claim 6 or the method of claim 13, further comprising rendering the projected content.

15. The method of claim 6 or the method of claim 13, further comprising storing downloaded keys for the DRM module in a secure storage.
